# EUROPÄISCHE PATENTSCHRIFT

(11) **EP 2 556 395 B1**
(45) Veröffentlichungstag und Bekanntmachung des Hinweises auf die Patenterteilung: **18.10.2017**
(21) Anmeldenummer: 11707140.7
(22) Anmeldetag: 24.02.2011
(51) Int. Cl.: G02B 6/00, F21V 8/00

(54) **LICHTLEITKÖRPER MIT HOHER LEUCHTINTENSITÄT UND HOHER TRANSPARENZ**
Light conduction body with high light intensity and high transparency
Corps conducteur de lumière doté d'une haute intensité lumineuse et d'une plus grande transparence

(30) Priorität: 11.11.2010 DE 102010043743; 08.04.2010 EP 10159342
(43) Veröffentlichungstag der Anmeldung: 13.02.2013
(73) Patentinhaber: Evonik Röhm GmbH, 64293 Darmstadt (DE)
(72) Erfinder: SCHMIDT, Jann, 64331 Weiterstadt (DE); PISULA, Wojciech, 55118 Mainz (DE); STEIN, Peter, Woodbridge, CT 06525 (US); ROTH, Christian, 64686 Lautertal (DE); SCHWARZ-BARAC, Sabine, 64560 Riedstadt (DE); ROCHHOLZ, Heiko, 55452 Rümmelsheim (DE); BAUM, Alexander, 60311 Frankfurt (DE)
(86) Internationale Anmeldenummer: PCT/EP2011/052706
(87) Internationale Veröffentlichungsnummer: WO 2011/124412

(56) Entgegenhaltungen:
- WO-A1-01/57434
- WO-A1-2007/058060
- WO-A1-2009/137053
- JP-A- 2004 351 649
- JP-A- 2009 212 076
- US-A1- 2005 117 369
- US-A1- 2005 239 581
- US-A1- 2005 272 879
- US-A1- 2007 133 935
- US-B1- 7 513 674

## Beschreibung

Die vorliegende Erfindung betrifft Verwendung eines Lichtleitkörpers mit verbesserter Leuchtintensität und Transparenz sowie ein Verfahren zu seiner Herstellung .

Lichtleitkörper, die auf dem Prinzip der Einbettung von Streupartikeln in eine transparente thermoplastische Kunststoffmatrix beruhen, sind bekannt.

So sind aus der EP 656 548 Lichtleitkörper bekannt, die Polymerpartikel als Streupartikel verwenden. Die Polymerpartikel weisen zu mehr als 98% eine Größe von mindestens 7 Mikrometern auf und werden zu 0,01 Gew.-% (100 Gew.-ppm) bis 1 Gew.-% (10000 Gew.-ppm) einem Matrixkunststoff zugegeben. Diese Lichtleitkörper weisen den Nachteil auf, dass die Witterungsbeständigkeit unzureichend ist und dass sie schon bei einer Dicke von 1 mm, insbesondere ab 2 mm eine Trübung - ausgedrückt durch den "Haze"-Wert - besitzen.

Die EP 1453900 beschreibt Lichtleitkörper, die als Streupartikel Bariumsulfat mit einer mittleren Teilchengröße von 0.3 - 20 Mikrometern in einer Konzentration von 0,001 Gew.-% (10 Gew.-ppm) - 0,08 Gew.-% (800 Gew.-ppm) enthalten. Auch diese Lichtleitkörper weisen den Nachteil auf, dass sie schon bei einer Dicke von 1 mm, insbesondere ab 2 mm eine Trübung besitzen.

US 2005/0272879 A1 beschreibt eine Lichtleitplatte aus einer polymerisierten Acrylharzmischung, die als Streupartikel Titandioxidpartikel mit einer durchschnittlichen Teilchengröße von 0,2 µm in einer Konzentration von 0.5 ppm umfasst.

WO 2009/137053 A1 offenbart optische Materialen auf Basis von quantenbeschränkten Halbleiter-Nanopartikeln. Zusätzlich zu quantenbeschränkten Halbleiter-Nanopartikeln können die optischen Materialen Streupartikeln wie Titandioxid-Partikeln mit einer Teilchengröße von 0,2 µm in einer Konzentration von etwa 0,001 Gew.-% bis etwa 5 Gew.-%, beispielsweise 0,1 Gew.-% bis 5 Gew.-% umfassen.

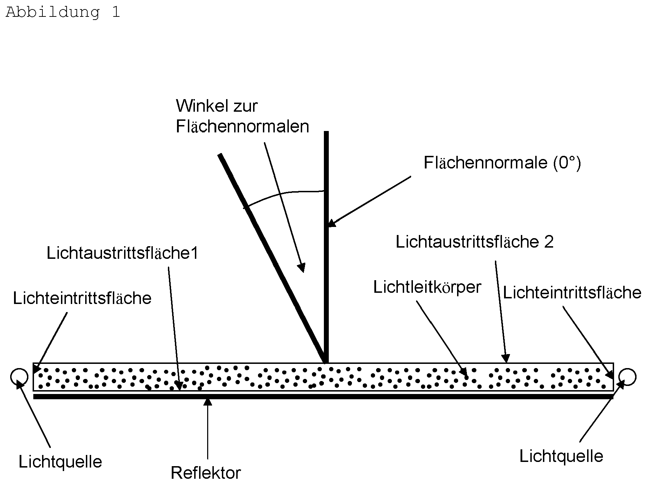

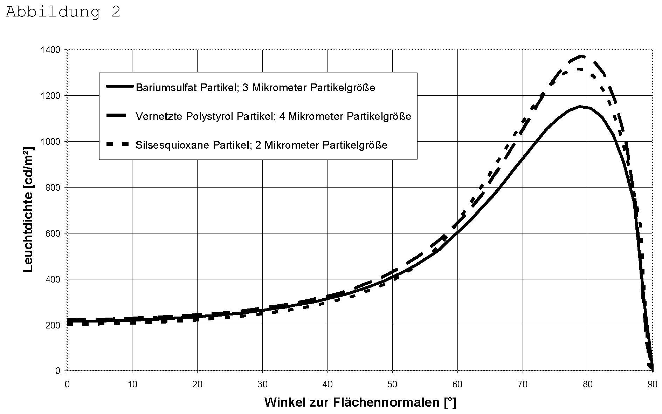

Die zuvor beschriebenen Lichtleitkörper des Standes der Technik weisen im Allgemeinen den Nachteil auf, dass bei senkrechter Betrachtung zur Lichtaustrittsfläche eine geringe Leuchtdichte erreicht wird. Erst bei großen Winkeln, gemessen zur Flächennormale der Lichtaustrittsfläche (siehe hierzu Abbildung 1), nimmt die Leuchtdichte deutlich zu. Dieser Effekt ist für verschiedene Streupartikel in Abbildung 2 dargestellt.

Neben Lichtleitkörpern mit Streupartikeln gibt es auch Lichtleitkörper, die durch mechanisches Einbringen von Störstellen auf der Oberfläche oder durch Bedrucken der Oberfläche hergestellt werden. Die Herstellung dieser Lichtleitkörper ist jedoch mit einem erheblich höheren Produktionsaufwand verbunden. Ferner verursacht insbesondere die Bedruckung eine schlechte Transparenz und beschränkt somit die Einsatzmöglichkeiten dieser Lichtleitkörper. Lichtleitkörper mit eingebetteten Streupartikeln können hingegen kostengünstig durch Extrusion, Spritzguss sowie durch Gussverfahren ohne Nachbearbeitung erzeugt werden. Beispiele für derart bedruckte Lichtleitkörper finden sich in der JP2004351649, der WO 2007/058060 der WO 2009/137053, der US 2005/272879.

In Anbetracht des zuvor diskutierten Standes der Technik war es somit Aufgabe der vorliegenden Erfindung Lichtleitkörper sowie ein Verfahren zu deren Herstellung bereitzustellen, die die Nachteile der Lichtleitkörper des Standes der Technik nicht oder nur in verringertem Umfang aufweisen.

Eine spezielle Aufgabe bestand darin Lichtleitkörper für die erfindungsgemäße Verwendung bereitzustellen, die eine geringe Trübung in Durchsicht, d.h. in Richtung der Flächennormalen, aufweisen und somit in Anwendungsgebieten eingesetzt werden können, die auf

Grund der optischen Vorgaben, für Lichtleitkörper des Standes der Technik nicht zugänglich sind.

Eine weitere spezielle Aufgabe bestand darin Lichtleitkörper für die erfindungsgemäße Verwendung bereitzustellen, die eine hohe Leuchtdichte bei geringem Winkeln, gemessen zur Flächennormale der Lichtaustrittsfläche, aufweisen.

Des Weiteren lag der Erfindung die Aufgabe zugrunde, Lichtleitkörper für die erfindungsgemäße Verwendung zur Verfügung zu stellen, die besonders einfach hergestellt werden können, z. B. durch Extrusion, Spritzguss oder durch Gussverfahren.

Darüber hinaus war es Aufgabe der vorliegenden Erfindung, Lichtleitkörper für die erfindungsgemäße Verwendung zu schaffen, die kostengünstig hergestellt werden können.

Ziel der vorliegenden Erfindung war es schließlich auch Lichtleitkörper für die erfindungsgemäße Verwendung bereitzustellen, die auf einfache Weise in Größe und Form den Anforderungen angepasst werden können.

Weitere nicht explizit genannte Aufgaben ergeben sich aus dem Gesamtzusammenhang der nachfolgenden Beschreibung, Beispiele und Ansprüche.

Gelöst werden diese Aufgaben durch die in Anspruch 1 beschriebenen Lichtleitkörper. Zweckmäßige Abwandlungen der erfindungsgemäßen Lichtleitkörper werden in den auf Anspruch 1. rückbezogenen Unteransprüchen unter Schutz gestellt.

Die vorliegende Erfindung betrifft somit die Verwendung eines Lichtleitkörpers als ein transparentes Verglasungselement,
wobei der Lichtleitkörper mindestens eine Lichteintrittsfläche und mindestens eine Lichtaustrittsfläche aufweist, und das Verhältnis von Lichtaustrittsfläche zu Lichteintrittsfläche mindestens 4 beträgt,
er einen Haze, gemessen nach ASTM D1003, von kleiner als 4% aufweist,
der Lichtleitkörper aus mindestens einem transparenten, thermoplastischen oder thermoelastischen Kunststoff besteht und als eingebettetes Lichtstreumittel Titandioxid Partikel mit einer mittleren Partikelgröße von 150 - 500 nm in einer Konzentration bezogen auf das Gewicht des Lichtleitkörpers von 0.1 - 10 Gew.-ppm umfasst und
das transparente Verglasungselement sich durch Einschalten mindestens einer an einer der Lichteintrittsflächen des Lichtleitkörpers angebrachten Lichtquelle als eine flächige Leuchte nutzen lässt.

Hinsichtlich des Verfahrens zur Herstellung der erfindungsgemäß verwendeten Lichtleitkörper liefert die nachfolgende Beschreibung eine Lösung der zugrunde liegenden Aufgabe.

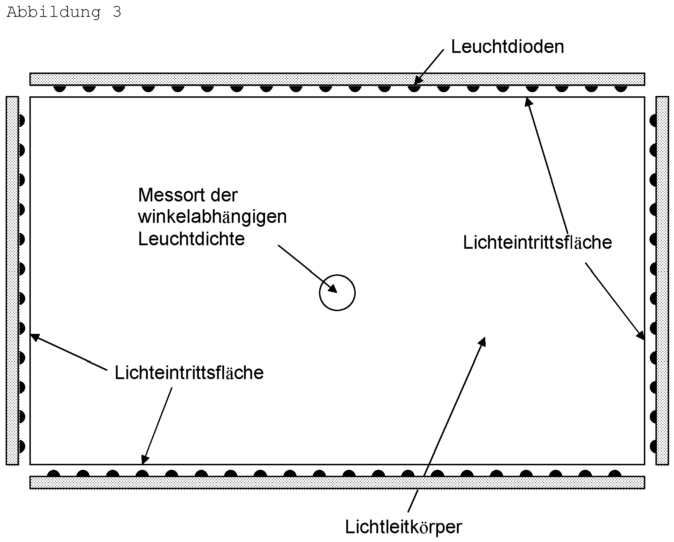

Bevor die vorliegende Erfindung im Detail beschrieben wird, werden einige wichtige Begriffe wie folgt definiert (siehe hierzu auch Abbildungen 1 und 3):

Der Begriff Lichtaustrittsfläche kennzeichnet eine Fläche des Lichtleitkörpers, die bestimmt ist Licht abzustrahlen. Die Lichteintrittsfläche wiederum ist in der Lage Licht in den Lichtleitkörper aufzunehmen, so dass der Lichtleitkörper das eingeleitete Licht über die Lichtaustrittsfläche(n) weitgehend gleichmäßig verteilen kann.

Die erfindungsgemäß verwendeten Lichtleitkörper weisen bevorzugt mindestens eine Dicke von 1 mm auf. Besonders bevorzugt liegt die Dicke im Bereich von 2 bis 25 mm und ganz besonders bevorzugt bei 3 bis 20 mm. Dem Lichtleitkörper können, wie in Abb. 1 angedeutet, noch weitere Schichten wie z. B. Spiegel- oder Reflexionsschichten zugeordnet sein.

Überrachenderweise wurde gefunden, dass durch Einbetten von Titandioxid-Streupartikeln, mit einer mittleren Partikelgröße von 150 bis 500 nm, die Nachteile der herkömmlichen Lichtleitkörper überwunden werden können. So haben die Erfinder zum Beispiel herausgefunden, dass erfindungsgemäße Lichtleitkörper enthaltend Titandioxidpartikel mit dieser speziellen mittleren Partikelgröße im Vergleich zu Lichtleitkörpern mit z. B. BaSO₄ Streupartikeln deutlich transparenter sind, trotz deutlich höherer Lichtintensität bei geringem Winkel zur Flächennormale der Lichtaustrittsfläche. Die erfindungsgemäßen Lichtleitkörper weisen bevorzugt eine Dicke - gemessen an der dünnsten Stelle - von mindestens 1 mm, besonders bevorzugt von 2 bis 25 mm und ganz besonders bevorzugt bei 3 bis 20 mm auf. Die erfindungsgemäß verwendeten Lichtleitkörper zeichnen sich zudem durch eine sehr geringe Trübung, gemessen als Haze nach ASTM D1003 aus, die kleiner als 4 %, bevorzugt kleiner als 2 %, besonders bevorzugt 0,2 bis 2 % ist. Damit wirken die erfindungsgemäßen Lichtleitkörper im Gegensatz zu den Lichtleitkörpern des Standes der Technik für das menschliche Auge weitgehend transparent und können auch in Anwendungsgebieten eingesetzt werden, die hohe Anforderungen an die optischen Eigenschaften haben. Besonders bevorzugt zeichnen sich die erfindungsgemäßen Lichtleitkörper dabei dadurch aus, dass sie keine für das menschliche Auge in einem Betrachtungsabstand von 1 m wahrnehmbare, ganz besonders bevorzugt gar keine Bedruckung, insbesondere mit Farbstoffen, auf der Oberfläche oder in einer anderen Schicht des Formkörpers aufweisen. In einer weiteren bevorzugten Ausführungsform weisen die erfindungsgemäßen Lichtleitkörper auch keine anderweitigen optischen Störstellen auf der Oberfläche oder in einer Schicht auf. Im Gegensatz zu den Lichtleitkörpern des Standes der Technik ist es somit erstmals gelungen eine sehr gleichmäßige Lichtauskopplung über den ganzen Lichtleitkörper in Kombination mit einer sehr hohen Transparenz desselben zu erhalten ohne den zusätzlichen Arbeitsschritt der Aufbringung von Bedruckungen oder Störstellen durchführen zu müssen.

Die Möglichkeit auf Bedruckungen und Störstellen verzichten zu können ermöglicht es zudem die erfindungsgemäßen Lichtleitkörper auch als Freiformkörper mit beliebiger räumlicher Gestalt auszugestalten. Im Gegensatz zu Plattenförmigen Lichtleitkörpern des Standes der Technik in denen das Muster der Störstellen bzw. Bedruckungen einfach berechnet werden kann, ist dies bei komplizierten Gestalten nicht möglich. In einer besonders bevorzugten Ausführungsform handelt es sich bei den erfindungsgemäßen Lichtleitkörpern somit um Freiformkörper mit hoher Transparenz und gleichförmiger Lichtauskopplung, wodurch eine bislang nicht mögliche gestalterische Freiheit erreicht wird.

Transparente Lichtleitkörper bieten vielfältige praktische aber auch dekorative Anwendungen. So können Verglasungen gestaltet werden, die bei ausgeschalteter Lichtquelle eine klare, verzerrungsfreie und ununterbrochene Durchsicht gewähren. Schaltet man die Lichtquellen ein, so wirkt die Verglasung als flächige gleichmäßige Lichtquelle, die zur Allgemein- oder Ambientbeleuchtung eingesetzt werden kann.

Lichtleitkörper, die Titandioxid-Streupartikel enthalten, die eine mittlere Partikelgröße von 150 bis 500 nm aufweisen, emittieren Licht sehr viel gleichmäßiger über alle Winkel, gemessen zur Flächennormale der Lichtleitkörper, als Lichtleitkörper gemäß Stand der Technik, z. B. der EP 1453900. Dies ist in Abbildung 4 und Abbildung 5 dargestellt. Die Leuchtdichte der erfindungsgemäßen Lichtleitkörper ist somit bei senkrechter Betrachtung, deutlich höher als beim Einsatz herkömmlicher Streupartikel.

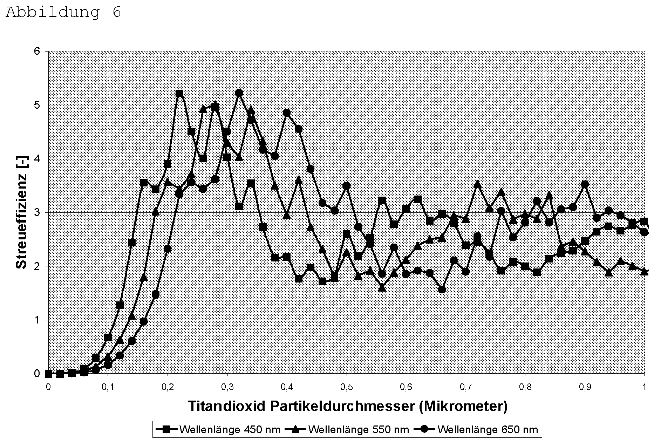

Die Verwendung von Titandioxid-Partikeln als Streupartikel in Lichtleitkörpern ist an sich bekannt. Die JP2002148443 beschreibt z. B. Lichtleitkörper, die Titandioxid mit einer Partikelgröße von kleiner 100 nm enthalten. Die Erfinder haben jedoch herausgefunden, dass, Titandioxid seine höchste Streueffizienz in den erfindungsgemäßen Streukörpern nahezu unabhängig von der Wellenlänge des Lichts bei einer Partikelgröße zwischen 150 und 500 nm besitzt. Dies wird in Abbildung 6 anhand einer Mie-Streusimulation von Titandioxid (Rutilmodifikation) in Polymethylmethacrylat verdeutlicht.Unterhalb von 150 nm, d.h. solche gemäß JP2002148443, streuen Titandioxid Partikel zunehmend wellenlängenselektiv. Das heißt, blaues Licht (Wellenlänge 450 nm) wird deutlich mehr gestreut als grünes Licht (550 nm) und noch mehr rotes Licht (650 nm). Das führt dazu, dass an den Lichteintrittsflächen in den Lichtleiter eingespeistes weißes Licht sich auf dem Weg im Lichtleiter entmischt. Dadurch ist das in geringem Abstand zu den Lichteintrittsflächen das aus den Lichtaustrittsflächen austretende Licht bläulich, in großem Abstand zu den Lichteintrittsflächen zunehmend gelblich bis rötlich. Diese führt zu einer störenden Wellenlängendispersion, d.h. das eingespeiste Licht tritt an den Lichtaustrittsflächen farblich verfälscht wieder aus. Dieses Problem wird durch die vorliegende Erfindung gelöst. Die erfindungsgemäß verwendeten Titandioxidpartikel weisen daher bevorzugt eine mittlere Partikelgröße von 150 bis 500 nm, besonders bevorzugt von 160 bis 450 nm, ganz besonders bevorzugt von 170 bis 450 nm und speziell bevorzugt von 200 bis 400 nm und ganz speziell bevorzugt von 220 bis 400 nm auf. Titandioxid-Partikel, die die oben genannten Eigenschaften aufweisen sind kommerziell erhältlich (z.B. KRONOS 2220 der Kronos Titan oder HOMBITAN R 610 K der Sachtleben Chemie). Diverse Methoden zu ihrer Herstellung sind bekannt.

Der Anteil an Titandioxidpartikeln im Lichtleitkörper beträgt 0,1 bis 10 Gew. -ppm, jeweils bezogen auf das Gewicht des Lichtleitkörpers. Dadurch kann trotz verbesserter Lichtintensität eine deutliche Verringerung des Anteils an Streupartikeln und somit ein Kostenvorteil erreicht werden. Der verringerte Anteil wirkt sich auch positiv auf die Transparenz aus, so dass auch Lichtleitkörper von mindestens 1 mm, bevorzugt mindestens 2 mm Dicke mit hoher Transparenz und Streuintensität hergestellt werden können. Ferner ist es möglich ein hohes Verhältnis von Lichtaustrittsfläche zu Lichteinleitungsfläche von mindestens 4, bevorzugt mindestens 10, besonders bevorzugt mindestens 20 und ganz besonders bevorzugt mindestens 80 zu realisieren. Hieraus ergibt sich, dass der Lichtleitkörper der vorliegenden Erfindung sich in starkem Maß von bekannten Abdeckungen für Beleuchtungskörper unterscheidet. Bekannte Abdeckungen zeichnen sich nämlich dadurch aus, dass die Lichteinleitungsfläche parallel zur Lichtaustrittsfläche ausgebildet ist, so dass beide Flächen in etwa die gleiche Größe aufweisen.

Bevorzugt weisen erfindungsgemäße Lichtleitkörper eine Länge im Bereich von 25 mm bis 3000 mm, vorzugsweise von 50 bis 2000 mm und besonders bevorzugt von 200 bis 2000 mm auf. Die Breite liegt bevorzugt im Bereich von 25 bis 3000 mm, vorzugsweise von 50 bis 2000 mm und besonders bevorzugt von 200 bis 2000 mm.

Es sind kubische Ausführungen aber auch sich nach einer Seite hin verjüngende Ausführungen, die die Form eines Keils aufweisen, denkbar. Bei der Keilform wird bevorzugt nur über eine Lichteintrittsfläche Licht eingekoppelt.

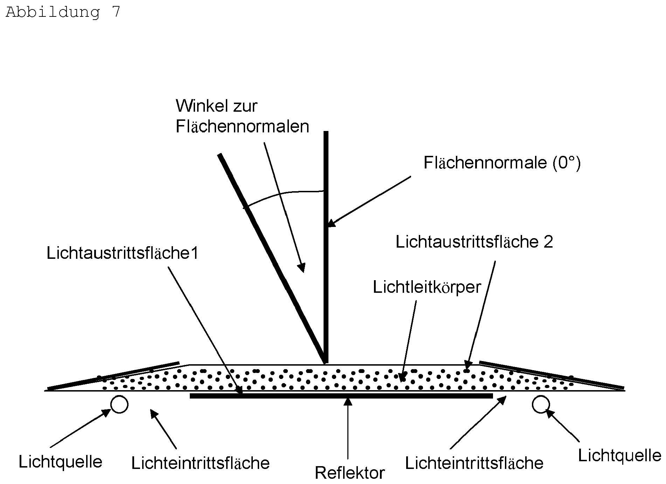

Das Licht tritt bevorzugt senkrecht zur Lichtaustrittsfläche in den Lichtleitkörper ein, d.h. die Lichteintrittsfläche steht senkrecht zur Lichtaustrittsfläche. Beispiele für diese Ausführungsform finden sich in den Abbildungen 1 und 3. In einer alternativen Ausführungsform ermöglichen es die erfindungsgemäßen Lichtleitkörper jedoch auch, dass die Lichteintrittsfläche nicht senkrecht zu Lichtaustrittsfläche steht und dennoch eine hohe Lichtintensität erreicht wird. Dies ist z. B. dann möglich, wenn der Lichtleitkörper derart ausgestaltet ist, dass das eintretende Licht durch entsprechende Brechung oder Reflektion an speziellen Schichten in die Lichtleitfläche gelenkt wird. Ein Beispiel hierfür wird in Abb. 7 dargestellt. Die erfindungsgemäßen Lichtleitkörper ermöglichen somit einen deutlich verbesserten Gestaltungsspielraum für den Anwender bzw. Designer.

Als Lichtquelle zur Beleuchtung der Lichteintrittsflächen der erfindungsgemäßen Lichtleitkörper können Leuchtstofflampen, Leuchtdioden, Glühlampen und Halogenglühlampen eingesetzt werden. Je nach Anordnung der Lichtquellen kann hierbei das Licht über alle vier Kanten eingestrahlt werden. Dies kann insbesondere bei sehr großen Lichtleitkörpern notwendig sein. Bei kleineren Lichtleitkörpern genügt es im Allgemeinen ein oder zwei Kanten des Lichtleitkörpers zu beleuchten. Zur besseren Auswertung der eingesetzten Lichtenergie können die Kanten, die nicht mit einer Lichtquelle versehen sind, reflektierend ausgestattet werden. Diese Ausstattung kann beispielsweise durch reflektierende Klebebänder erfolgen. Des Weiteren kann ein reflektierender Lack auf diese Kanten aufgebracht werden.

Die JP 7020459 beschreibt Lichtleitkörper, die Titandioxid in der Anatas-Modifikation als Streupartikeln enthalten. Die Erfinder haben gefunden, dass Titandioxid mit hohem Anatasanteil im Zusammenwirken mit Feuchtigkeit und Sauerstoff zur beschleunigten Zersetzung des Lichtleitkörper führen können. Daher weisen die erfindungsgemäßen Lichtleitkörper in einer bevorzugten Ausführungsform Titandioxidpartikel mit einem Anteil der Rutil-Modifikation von mindestens50 Gew. %, bevorzugt mindestens 60 Gew. %, besonders bevorzugt mindestens 70 Gew. % und ganz besonders mindestens 90 Gew. % auf.

Zur Herstellung der erfindungsgemäßen Lichtleitkörper, d.h. als transparente thermoplastische oder thermoelastische Kunststoffe zur Einbettung der Titandioxid Partikel, sind transparente Polycarbonate, Cycloolefincopolymere, Polystyrole, Polyester und besonders (Meth)acrylatpolymerisate geeignet.

Diese (Meth) acrylatpolymere werden im Allgemeinen durch radikalische Polymerisation von Monomermischungen erhalten. Die Monomermischungen enthalten ganz besonders bevorzugt Methylmethacrylat, insbesondere mindestens 40 Gew. -%, vorzugsweise mindestens 60 Gew. -% und besonders bevorzugt mindestens 80 Gew. -%, bezogen auf das Gewicht der Monomermischung, Methylmethacrylat.

Daneben können diese Monomermischungen weitere (Meth) acrylate enthalten, die mit Methylmethacrylat copolymerisierbar sind. Der Ausdruck (Meth) acrylate umfasst Methacrylate und Acrylate sowie Mischungen aus beiden. Diese Monomere sind weithin bekannt. Zu diesen gehören unter anderem (Meth) acrylate, die sich von gesättigten Alkoholen ableiten, wie beispielsweise Methylacrylat, Ethyl (meth) acrylat, Propyl (meth) acrylat, n-Butyl (meth) acrylat, tert.-Butyl (meth) acrylat, Pentyl (meth) acrylat und 2-Ethylhexyl (meth) acrylat ; (Meth) acrylate, die sich von ungesättigten Alkoholen ableiten, wie z. B. Oleyl (meth) acrylat, 2-Propinyl (meth) acrylat, Allyl (meth) acrylat, Vinyl (meth) acrylat ; Aryl (meth) acrylate, wie Benzyl (meth) acrylat oder Phenyl (meth) acrylat, wobei die Arylreste jeweils unsubstituiert oder bis zu vierfach substituiert sein können ; Cycloalkyl (meth) acrylate, wie 3-Vinylcyclohexyl (meth) acrylat, Bornyl (meth) acrylat ; Hydroxylalkyl (meth) acrylate, wie 3-Hydroxypropyl (meth) acrylat, 3, 4-Dihydroxybutyl (meth) acrylat, 2-Hydroxyethyl (meth) acrylat, 2-Hydroxypropyl (meth) acrylat ; Glycoldi (meth) acrylate, wie 1, 4-Butandiol (meth) acrylat, (Meth) acrylate von Etheralkoholen, wie Tetrahydrofurfuryl (meth) acrylat, Vinyloxyethoxyethyl (meth) acrylat ; Amide und Nitrile der (Meth) acrylsäure, wie N- (3-Dimethylaminopropyl) (meth) acrylamid, N- (Diethylphosphono) (meth) acrylamid, 1-Methacryloylamido-2-methyl-2-propanol ; schwefelhaltige Methacrylate, wie Ethylsulfinylethyl (meth) acrylat, 4-Thiocyanatobutyl (meth) acrylat, Ethylsulfonylethyl (meth) acrylat, Thiocyanatomethyl (meth) acrylat, Methylsulfinylmethyl (meth) acrylat, Bis ( (meth) acryloyloxyethyl) sulfid ; mehrwertige (Meth) acrylate, wie Trimethyloylpropantri (meth) acrylat.

Neben den zuvor dargelegten (Meth) acrylaten können die zu polymerisierenden Zusammensetzungen auch weitere ungesättigte Monomere aufweisen, die mit Methylmethacrylat und den zuvor genannten (Meth) acrylaten copolymerisierbar sind.

Hierzu gehören unter anderem 1-Alkene, wie Hexen-1, Hepten-1 ; verzweigte Alkene, wie beispielsweise Vinylcyclohexan, 3, 3-Dimethyl-l-propen, 3-Methyl-l- diisobutylen, 4-Methylpenten-1 ; Acrylnitril ; Vinylester, wie Vinylacetat ; Styrol, substituierte Styrole mit einem Alkylsubstituenten in der Seitenkette, wie z. B. α - Methylstyrol und α -Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole ; Heterocyclische Vinylverbindungen, wie 2-Vinylpyridin, 3-Vinylpyridin, 2-Methyl-5-vinylpyridin, 3-Ethyl- 4-vinylpyridin, 2, 3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-l-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole ; Vinyl-und Isoprenylether ; Maleinsäurederivate, wie beispielsweise Maleinsäureanhydrid, Methylmaleinsäureanhydrid, Maleinimid, Methylmaleinimid ; und Diene, wie beispielsweise Divinylbenzol.

Im Allgemeinen werden diese Comonomere in einer Menge von 0 bis 60 Gew. -%, vorzugsweise 0 bis 40 Gew. -% und besonders bevorzugt 0 bis 20 Gew.-%, bezogen auf das Gewicht der Monomeren, eingesetzt, wobei die Verbindungen einzeln oder als Mischung verwendet werden können.

Die Polymerisation wird im Allgemeinen mit bekannten Radikalinitiatoren gestartet. Zu den bevorzugten Initiatoren gehören unter anderem die in der Fachwelt weithin bekannten Azoinitiatoren, wie AIBN und 1, 1-Azobiscyclohexancarbonitril, sowie Peroxyverbindungen, wie Methylethylketonperoxid, Acetylacetonperoxid, Dilaurylperoxyd, tert.-Butylper-2- ethylhexanoat, Ketonperoxid, Methylisobutylketonperoxid, Cyclohexanonperoxid, Dibenzoylperoxid, tert. - Butylperoxybenzoat, tert.- Butylperoxyisopropylcarbonat, 2,5-Bis (2-ethylhexanoyl- peroxy) -2,5-dimethylhexan, tert. -Butylperoxy-2ethylhexanoat, tert. -Butylperoxy-3, 5,5-trimethylhexanoat, Dicumylperoxid, 1, 1-Bis (tert. - butylperoxy) cyclohexan, 1, 1-Bis (tert. -butylperoxy) 3,3, 5-trimethylcyclohexan, Cumylhydroperoxid, tert.-Butylhydroperoxid, Bis (4-tert. - butylcyclohexyl) peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

Diese Verbindungen werden häufig in einer Menge von 0,01 bis 10 Gew. -%, vorzugsweise von 0,5 bis 3 Gew.-%, bezogen auf das Gewicht der Monomeren, eingesetzt.

Es können verschiedene Poly(meth)acrylate eingesetzt werden, die sich beispielsweise im Molekulargewicht oder in der Monomerzusammensetzung unterscheiden.

Zur Herstellung der erfindungsgemäßen Lichtleitkörper können die Monomermischungen in die gewünschte Form gegossen und dann polymerisiert werden. Als Gießverfahren können sowohl diskontinuierliche oder kontinuierliche Gießverfahren zur Anwendung kommen.

Es kann aber auch zunächst eine Formmasse hergestellt und daraus der Lichtleitkörper geformt werden.

Derartig besonders bevorzugte Formmassen sind unter dem Handelsnamen PLEXIGLAS^{®} von der Fa. Röhm GmbH kommerziell erhältlich.

Das Gewichtsmittel des Molekulargewichts Mw der Formmassen kann in weiten Bereichen schwanken, wobei das Molekulargewicht üblicherweise auf den Anwendungszweck und die Verarbeitungsweise der Formmasse abgestimmt wird. Im Allgemeinen liegt es aber im Bereich zwischen 20 000 und 1 000 000 g/mol, vorzugsweise 50 000 bis 500 000 g/mol und besonders bevorzugt 80 000 bis 300 000 g/mol, ohne dass hierdurch eine Einschränkung erfolgen soll.

Nach Zugabe der Titandioxid-Partikel können aus diesen Formmassen Lichtleitkörper durch herkömmliche thermoplastische Formgebungsverfahren hergestellt werden. Hierzu gehören insbesondere die Extrusion sowie der Spritzguss.

In einer besonders bevorzugten Ausführungsform werden die erfindungsgemäßen Lichtleitkörper im Mehrkomponenten, bevorzugt 2-Komponenten, Spritzguß hergestellt, wobei nur eine Komponente (Formmasse) die Titandioxidpartikel enthält und die andere keine Streupartikel. Auf diese Weise ist es möglich Lichtleitkörper herzustellen bei denen die Titandioxid-enthaltende Komponente ein bestimmtes Muster darstellt. In ausgeschaltetem Zustand, d.h. ohne Lichteintritt, erscheint der Formkörper als homogener, transparenter Formkörper, das Muster ist nicht zu sehen. Nach dem Einschalten ist das Muster jedoch zu sehen, da nur der Teil der Formkörpers, der die Titandioxidpartikel enthält, das Licht auskoppelt.

In einer bevorzugten Ausführungsform umfasst die vorliegende Erfindung daher auch Lichtleitkörper die nur in bestimmten Bereichen Lichtstreumittel und einen Haze gemäß Anspruch 1 aufweisen. Besonders bevorzugt sind die restlichen Bereiche nicht lichtstreuend ausgeführt. Damit können z. B. Warnschilder hergestellt werden oder auch Abdeckungen von z. B. Fahrzeugcockpits, in denen die Warnsymbole nach Aufleuchten dreidimensional hervorstehend erscheinen ("schwebende Symbole").

Die erfindungsgemäßen Freiformkörper können bevorzugt durch Spritzguss oder durch Thermoformen zuvor hergestellter Lichtleitplatten hergestellt werden. Im speziellen lassen sich durch die Basis eines Thermoplasts leuchtende Freiformkörper herstellen. So kann z. B. ein geschwungenes leuchtendes Display im Automobil Interior oder Konturen auf einer Waschmaschine kann durch thermogeformte Platten hergestellt werden oder direkt im Spritzguss.

Durch den Verzicht auf Bedruckungen lässt sich dabei ein zusätzlicher Prozessschritt und damit verbundenen Zusatzkosten vermeiden. Im Vergleich zu Lichtleitkörpern, welche mittels Spritzguss in strukturierten Formen hergestellt werden, ermöglicht eine erfindungsgemäße Formmasse mit Streukörpern einen Verzicht auf die kostspielige Strukturierung der Spritzgußform, darüber hinaus kürzere Zykluszeiten, da keine Mikrostrukturen präzise ausgeformt werden müssen, sowie höhere Ausbeuten. Außerdem ist die lichttechnische Auslegung von Mikrostrukturen in Freiformoberflächen deutlich aufwändiger.

Wie bereits erwähnt können Lichtleitkörper der vorliegenden Erfindung auch durch Gussverfahren hergestellt werden. Hierbei werden bevorzugt Acrylharzmischungen in eine Form gegeben und polymerisiert.

Ein bevorzugtes Acrylharz umfasst beispielsweise
A) 0,1 bis 10 Gew.-ppm Titandioxidpartikel Partikel mit einem mittleren Durchmesser von 150 bis 500 nm
B) 40-99, 999 Gew. -% Methylmethacrylat,
C) 0-59, 999 Gew.-% der oben definierten Comonomere,
D) 0-59, 999 Gew. -% in (B) oder (C) lösliche Polymere,
wobei die Komponenten A) bis D) 100 Gew.-% ergeben.

Darüber hinaus weist das Acrylharz die zur Polymerisation notwendigen Initiatoren auf. Die Komponenten A bis D sowie die Initiatoren entsprechen den Verbindungen, die auch zur Herstellung geeigneter Polymethylmethacrylat Formmassen eingesetzt werden.

Die Formmassen sowie die Acrylharze können übliche Zusatzstoff aller Art enthalten. Hierzu gehören unter anderem Antistatika, Antioxidantien, Entformungsmittel, Flammschutzmittel, Schmiermittel, Farbstoffe, Fliessverbesserungsmittel, Füllstoffe, Lichtstabilisatoren und organische Phosphorverbindungen, wie Phosphite oder Phosphonate, Pigmente, Verwitterungsschutzmittel und Weichmacher.

Die Menge an Zusatzstoffen ist jedoch auf den Anwendungszweck beschränkt. So sollte die lichtleitende Eigenschaft der Polymethylmethacrylat-Lichtleitkörper nicht zu stark durch Additive beeinträchtigt werden.

Die Lichtleitkörper der vorliegenden Erfindung können zur Beleuchtung von LCD-Displays, Hinweisschildern und Reklametafeln dienen. Besonders bevorzugt werden die erfindungsgemäßen Lichtleitkörper als transparente Verglasungselemente, die sich durch Einschalten der an den Lichteintrittsflächen angebrachten Lichtquellen als flächige Leuchten nutzen lassen, verwendet.

Weiterhin können die erfindungsgemäßen Lichtleitkörper zu Herstellung von Schildern, Anzeigeelementen, Werbeobjekten etc., welche bestimmte Symbole bzw. Zeichen erst nach dem Einschalten sichtbar machen.

### Meßmethoden:

### Anteil an TiO₂ im Lichtleitkörper

Der Lichtleitkörper wird verascht Die Masse der verbliebenen Asche wird ins Verhältnis zur Masse des Lichtleitkörpers gesetzt. Hierbei wird im Rahmen der vorliegenden Erfindung die komplette Masse der Asche mit dem TiO₂-Gehalt gleichgesetzt.

### Mittlere Partikelgröße der TiO₂-Partikel im Lichtleitkörper

Mit einem Transmissionselektronenmikroskop werden Bilder des Lichtleitkörpers aufgenommen. Die Partikeldurchmesser der in den Lichtleitkörper eingebetteten Titandioxid Partikel wird bestimmt, indem ein Mittelwert aus der größten und der kleinsten Ausdehnung des jeweiligen Titandioxid Partikels gebildet wird. Aus 50 Titandioxid Partikeldurchmessern wird die mittlere Partikelgröße bestimmt. Die Probenpräparation der Lichtleitkörper zur elektronenmikroskopischen Untersuchung wird nach üblichen, dem Fachmann bekannten Verfahren durchgeführt.

### Anteil der Rutilmodifikation der TiO₂-Partikel

Mittels Ramanspektroskopie wird die Modifikation der Titandioxid Partikel bestimmt. Der Anteil an Rutilpartikeln im Verhältnis zu den insgesamt vermessenen Partikeln wird danach ermittelt. Vorzugsweise werden mindestens 100 Titandioxid Partikel analysiert. Um die Messgenauigkeit zu erhöhen können falls notwendig noch mehr Partikel untersucht werden.

### Leuchtdichte

Die Messung der Leuchtdichte erfolgt mit einem handelsüblichen Leuchtdichtemessgerät (z.B. Fa. LMT oder Minolta)

Die nachfolgenden Beispiele dienen zur Verdeutlichung und näheren Erläuterung der vorliegenden Erfindung, schränken diese jedoch in keiner Weise ein.

### Vergleichsbeispiel 1:

In einem Einschneckenextruder wurde Polymethylmethacrylat Formmasse mit einem Bariumsulfat enthaltenen Masterbatch vermischt und aufgeschmolzen. Die resultierende Schmelze enthielt 160 Gew.-ppm Bariumsulfat bezogen auf das Gewicht des Polymethylmethacrylats mit einer mittleren Partikelgröße vom 3 Mikrometern. Die Schmelze wurde mittels einer Breitschlitzdüse aus dem Extruder ausgetragen und in einem Glättwerk zu einer Polymethylmethacrylat Platte geformt. Aus der Polymethylmethacrylat Platte wurde ein rechteckiger Lichtleitkörper von 900 mm Länge, 500 mm Breite und 4 mm Dicke geschnitten. Dieser Lichtleitkörper wurde an allen 4 mm dicken Kanten (Lichteintrittsflächen) mit Leuchtdioden versehen, die das Licht in die Kanten abgeben. Auf einer Oberfläche des Lichtleitkörpers (Lichtaustrittsfläche 1) wurde eine weiße, diffus reflektierende Folie angeordnet. Mittig auf der gegenüberliegenden Oberfläche des Lichtleitkörpers (Lichtaustrittsfläche 2) wurde die Leuchtdichte in verschiedenen Winkeln zur Flächennormalen der Lichtaustrittsfläche 2 des Lichtleitkörpers gemessen.
Aus dem gleichen extrudierten Lichtleitkörper wurde ein Probestück von 100 mm Länge, 100 mm Breite und 4 mm Dicke geschnitten und die Trübung des 4 mm dicken Probestücks gemessen.

### Beispiel 1:

Es wurde wie in Vergleichsbeispiel 1 eine 4 mm dicke Platte geformt, die anstatt Bariumsulfat 1,2 Gew.-ppm Titandioxid mit einer Partikelgröße von 200 nm enthält. Wie in Vergleichsbeispiel 1 wurde Leuchtdichte bei verschiedenen Winkeln und die Trübung bestimmt.

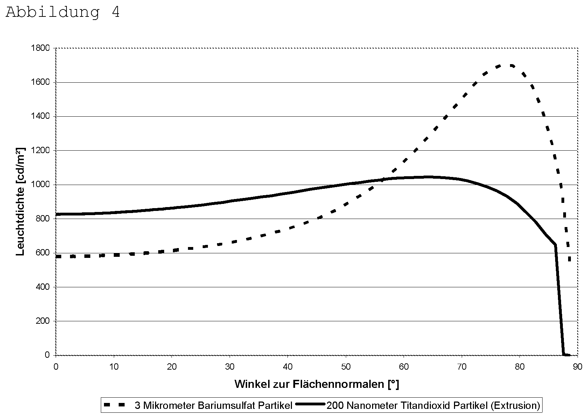

Abbildung 4 zeigt, dass die Leuchtdichte des mit Titandioxid versetzten Lichtleitkörpers gleichmäßiger über die Winkel zur Flächennormale verteilt ist als die Leuchtdichte eines mit Bariumsulfat versetzten Lichtleitkörpers. Weiterhin ist zu erkennen, dass die Leuchtdichte in Richtung der Flächennormalen, also beim Winkel 0°, bei der Platte mit Titandioxid höher ist als bei der Platte mit Bariumsulfat.
Die Trübung des Titandioxid Lichtleitkörpers ist darüber hinaus deutlich geringer als die Trübung des mit Bariumsulfat versetzten Lichtleitkörpers.

### Beispiel 2:

Einer polymerisierbaren Lösung von Polymethylmethacrylat in Methylmethacrylat wurden 1,2 Gew.-ppm Titandioxid Partikel bezogen auf das Gewicht der Lösung mit einer mittleren Partikelgroße von 200 nm zugegeben. Zur Lösung wurden ein radikalische Polymerisationsinitiator, ein UV Absorber und ein Trennmittel zugesetzt. Die Lösung wurde in einer Kammer aus zwei Silikatglasscheiben, die durch eine umlaufende Dichtschnur versehen ist, gefüllt und bei 60°C vor- und später bei 120 endpolymerisiert. Aus der so erhaltenen 4 mm dicken Polymethylmethacrylat Platte wurde ein Lichtleitkörper von 900 mm Länge, 500 mm Breite geschnitten. Der Lichtleitkörper wurde allseitig mit Leuchtdioden versehen, die das Licht in alle 4 mm dicken Kanten (Lichteintrittsflächen) des Lichtleitkörpers abgeben. Auf einer Oberfläche des Lichtleitkörpers (Lichtaustrittsfläche 1) wurde eine weiße, diffus reflektierende Folie angeordnet. Auf der gegenüberliegenden Oberfläche der Platte (Lichtaustrittsfläche 2) wurde die Leuchtdichte in verschiedenen Winkeln zur Flächennormalen der Oberfläche des Lichtleitkörpers gemessen.
Aus der gleichen Platte wurde ein Probestück von 100 mm Länge, 100 mm Breite und 4 mm Dicke geschnitten und die Trübung des 4 mm dicken Probestücks als Haze-Wert gemessen.

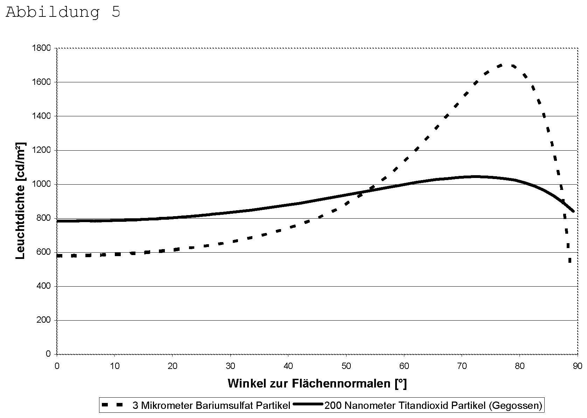

Abbildung 5 zeigt, dass auch bei dem durch radikalische Polymerisation im Gießverfahren hergestellten Lichtleitkörper die Leuchtdichte, des mit Titandioxid versetzten Lichtleitkörpers, gleichmäßig über die Winkel zur Flächennormale ist. Weiterhin ist zu erkennen, dass, wie in Beispiel 1, die Leuchtdichte des Lichtleitkörpers mit Titandioxid in Richtung der Flächennormalen höher ist als bei dem Lichtleitkörper mit Bariumsulfat.

Tabelle 1 stellt die Leuchtdichten des extrudierten Lichtleitkörpers mit 3 Mikrometern Bariumsulfat-Streupartikel aus Vergleichsbeispiel 1 dem extrudierten Lichtleitkörper mit 200 nm Titandioxid-Streupartikeln aus Beispiel 1 und dem gegossenen (radikalisch polymerisierten) Lichtleitkörper mit 200 nm Titandioxid-Streupartikel aus Beispiel 2 gegenüber.

Tabelle 2 stellt die Trübung des extrudierten Lichtleitkörpers mit 3 Mikrometern Bariumsulfat-Streupartikel aus Beispiel 1 dem extrudierten Lichtleitkörper mit 200 nm Titandioxid-Streupartikeln aus Beispiel 1 und dem gegossenen (radikalisch polymerisierten) Lichtleitkörper mit 200 nm Titandioxid-Streupartikel aus Beispiel 2 gegenüber. Die mit Titandioxid-Streupartikel hergestellten Lichtleitkörper weisen bei gleicher Dicke eine deutlich geringere Trübung gemessen als Haze auf und sind visuell betrachtet transparent.

**Tabelle 1**

| | Streupartikel | Konzentration [Gew.-ppm] | Leuchtdichte in Richtung Flächennormale [cd/m²] |
|---|---|---|---|
| Vergleichsbeispiell | Bariumsulfat | 160 | 580 |
| Beispiel 1 | Titandioxid | 1,2 | 825 |
| Beispiel 2 | Titandioxid | 1,2 | 783 |

**Tabelle 2**

| | Streupartikel | Konzentration [Gew.-ppm] | Haze [%] |
|---|---|---|---|
| Vergleichsbeispiell | Bariumsulfat | 160 | 21,07 |
| Beispiel 1 | Titandioxid | 1,2 | 1,92 |
| Beispiel 2 | Titandioxid | 1,2 | 1,47 |

### Beispiel 3

### Ausführungsbeispiel Freiformkörper:

Aus einer Lichtleitplatte gemäß Beispiel 1. wurde mittels eines Thermoformprozesses ein Freiformkörper hergestellt. Dieser wies keine Bedruckungen auf der Oberfläche auf und zeigte dennoch eine gleichmäßige Leuchterscheinung.

### Beispiel 4:

### Ausführungsbeispiel schwebende Symbole:

Ein schwebender Navigationpfeil im Automobil-Kombi-Instrument wurde durch folgende Technik hergestellt: Im Zwei-Kombonenten-Spritzguss wird mit einer erfindungsgemäßen lichtstreuenden Formmasse der Navigationspfeil gespritzt. Dieser Pfeil wird in eine zweite glasklare Formmasse-Komponente eingebettet. Dies entspricht quasi einer Intarsie auf der Basis des Spritzguss.

Das Halbzeug wurde danach mittig in einem Kombi-Instrument platziert und mit LEDs von der Seite her beleuchtet. Im nichtbeleuchteten Zustand sieht der Autofahrer durch die vollständig transparente Platte durch und erkennt keine Konturen. Durch das Beleuchten läuft das Licht durch die glasklare Formmasse wie durch einen Lichtleiter durch und ist somit nicht leuchtend. Im Bereich des Navigationspfeils koppeln die lichtstreuenden Partikel das Licht aus und die Kontur des Navigationspfeils leuchtet schwebend auf. Diese Technik lässt sich auf verschiedene Symbolbeleuchtungen übertragen.

## Patentansprüche

1. Verwendung eines Lichtleitkörpers als ein transparentes Verglasungselement,
wobei der Lichtleitkörper mindestens eine Lichteintrittsfläche und mindestens eine Lichtaustrittsfläche aufweist, und
das Verhältnis von Lichtaustrittsfläche zu Lichteintrittsfläche mindestens 4 beträgt,
er einen Haze, gemessen nach ASTM D1003, von kleiner als 4% aufweist,
der Lichtleitkörper aus mindestens einem transparenten, thermoplastischen oder thermoelastischen Kunststoff besteht und als eingebettetes Lichtstreumittel Titandioxid Partikel mit einer mittleren Partikelgröße von 150 - 500 nm in einer Konzentration bezogen auf das Gewicht des Lichtleitkörpers von 0.1 - 10 Gew.-ppm umfasst und
das transparente Verglasungselement sich durch Einschalten mindestens einer an einer der Lichteintrittsflächen des Lichtleitkörpers angebrachten Lichtquelle als eine flächige Leuchte nutzen lässt.

2. Verwendung nach Anspruch 1,
**dadurch gekennzeichnet,**
**dass** die Titandioxid Partikel zu mindestens 50 Gew.-% in der Rutil-Modifikation vorliegen.

3. Verwendung gemäß Anspruch 1 oder 2,
**dadurch gekennzeichnet,**
**dass** das Verhältnis von Lichtaustrittsfläche des Lichtleitkörpers zu seiner Lichteintrittsfläche mindestens 20 beträgt.

4. Verwendung gemäß einem oder mehreren der vorigen Ansprüche,
**dadurch gekennzeichnet,**
**dass** der Lichtleitkörper nur in bestimmten Bereichen Lichtstreumittel gemäß Anspruch 1 aufweist und/oder dass der Lichtleitkörper Bereiche, die nicht lichtstreuend ausgeführt sind, aufweist.

5. Verwendung gemäß einem oder mehreren der vorigen Ansprüche,
**dadurch gekennzeichnet,**
**dass** die Titandioxidpartikel eine mittlere Partikelgröße von 160 bis 450 nm und besonders bevorzugt von 170 bis 400 nm aufweisen.

6. Verwendung nach einem der Ansprüche 1 bis 5, **dadurch gekennzeichnet,**
**dass** der Lichtleitkörper keine Bedruckung aufweist.

7. Verwendung gemäß einem oder mehreren der vorigen Ansprüche,
**dadurch gekennzeichnet,**
**dass** die Lichtaustrittsfläche des Lichtleitkörpers senkrecht zu seiner Lichteintrittsfläche steht.

8. Verwendung gemäß einem oder mehreren der Ansprüche 1 bis 6,
**dadurch gekennzeichnet,**
**dass** die Lichtaustrittsfläche des Lichtleitkörpers nicht senkrecht zu seiner Lichteintrittsfläche steht und/oder dass es sich um einen Freiformkörper handelt.

9. Verwendung gemäß einem oder mehreren der vorigen Ansprüche,
**dadurch gekennzeichnet,**
**dass** der Lichtleitkörper mindestens 40 Gew.%, bevorzugt mindestens 60 Gew. %, bezogen auf das Gewicht des Lichtleitkörpers, Polymethylmethacrylat umfasst.

## Claims

1. Use of a light guide body as a transparent glazing element, wherein the light guide body has at least one light entry surface and at least one light emitting surface, and the ratio of the light emitting surface to the light entry surface is at least 4,
it has a haze, measured according to ASTM D1003, of less than 4%,
the light guide body consists of at least one transparent thermoplastic or thermoelastic plastic and comprises titanium dioxide particles with an average particle size of 150 - 500 nm as embedded light scattering means in a concentration of 0.1 - 10 wt.ppm, expressed in terms of the weight of the light guide body and the transparent glazing element can be used as a flat light by switching on at least one light source fitted on one of the light entry surfaces of the light guide body.

2. Use according to Claim 1,
**characterized in that**
at least 50 wt% of the titanium dioxide particles are present in the rutile modification.

3. Use according to Claim 1 or 2,
**characterized in that**
the ratio of the light emitting surface to the light entry surface is at least 20.

4. Use according to one or more of the preceding claims,
**characterized in that**
the light guide body has light scattering means according to Claim 1 only in particular regions and/or **in that** the light guide body has regions which are not configured to be light-scattering.

5. Use according to one or more of the preceding claims,
**characterized in that**
the titanium dioxide particles have an average particle size of from 160 to 450 nm and particularly preferably from 170 to 400 nm.

6. Use according to one of Claims 1 to 5,
**characterized in that**
the light guide body does not have any printing.

7. Use according to one or more of the preceding claims,
**characterized in that**
the light emitting surface of the light guide body is perpendicular to its light entry surface.

8. Use according to one or more of Claims 1 to 6,
**characterized in that**
the light emitting surface of the light guide body is not perpendicular to its light entry surface and/or **in that** the shape is a freeform body.

9. Use according to one or more of the preceding claims,
**characterized in that**
the light guide body comprises at least 40 wt% of polymethyl methacrylate, preferably at least 60 wt%, expressed in terms of the weight of the light guide body.

## Revendications

1. Utilisation d'un corps conducteur de lumière en tant qu'élément de vitrification transparent, le corps conducteur de lumière comprenant au moins une surface d'entrée de lumière et au moins une surface de sortie de lumière, et le rapport entre la surface de sortie de lumière et la surface d'entrée de lumière étant d'au moins 4, ledit corps conducteur de lumière présentant un trouble, mesuré selon ASTM D1003, de moins de 4 %,
le corps conducteur de lumière étant constitué d'au moins un plastique thermoplastique ou thermoélastique transparent, et comprenant en tant qu'agent de diffusion de lumière incorporé des particules de dioxyde de titane ayant une taille de particule moyenne de 150 à 500 nm en une concentration par rapport au poids du corps conducteur de lumière de 0,1 à 10 ppm en poids, et l'élément de vitrification transparent pouvant être utilisé par enclenchement d'au moins une source de lumière disposée sur une des surfaces d'entrée de lumière du corps conducteur de lumière en tant qu'éclairage plat.

2. Utilisation selon la revendication 1, **caractérisée en ce que** les particules de dioxyde de titane se présentent à hauteur d'au moins 50 % en poids sous la forme rutile.

3. Utilisation selon la revendication 1 ou 2, **caractérisée en ce que** le rapport entre la surface de sortie de lumière du corps conducteur de lumière et sa surface d'entrée de lumière est d'au moins 20.

4. Utilisation selon une ou plusieurs des revendications précédentes, **caractérisée en ce que** le corps conducteur de lumière ne comprend des agents de diffusion de lumière selon la revendication 1 que dans certaines zones et/ou **en ce que** le corps conducteur de lumière comprend des zones qui ne sont pas configurées pour diffuser la lumière.

5. Utilisation selon une ou plusieurs des revendications précédentes, **caractérisée en ce que** les particules de dioxyde de titane présentent une taille de particule moyenne de 160 à 450 nm et de manière particulièrement préférée de 170 à 400 nm.

6. Utilisation selon l'une quelconque des revendications 1 à 5, **caractérisée en ce que** le corps conducteur de lumière ne comprend pas d'impression.

7. Utilisation selon une ou plusieurs des revendications précédentes, **caractérisée en ce que** la surface de sortie de lumière du corps conducteur de lumière est perpendiculaire à sa surface d'entrée de lumière.

8. Utilisation selon une ou plusieurs des revendications 1 à 6, **caractérisée en ce que** la surface de sortie de lumière du corps conducteur de lumière n'est pas perpendiculaire à sa surface d'entrée de lumière et/ou **en ce qu'**il s'agit d'un corps à forme libre.

9. Utilisation selon une ou plusieurs des revendications précédentes, **caractérisée en ce que** le corps conducteur de lumière comprend 40 % en poids, de préférence au moins 60 % en poids, par rapport au poids du corps conducteur de lumière, de polyméthacrylate de méthyle.
